# EUROPÄISCHE PATENTSCHRIFT

(11) **EP 0 615 405 B1**
(45) Veröffentlichungstag und Bekanntmachung des Hinweises auf die Patenterteilung: **27.12.1995**
(21) Anmeldenummer: 93115910.7
(22) Anmeldetag: 01.10.1993
(51) Int. Cl.: H05K 13/04, B23P 21/00

(54) **Bearbeitungs- und Montagesystem für Kleinbauteile**
Machining and assembling system for small objects
Système d'usinage et d'assemblage pour pièces de petites dimensions

(30) Priorität: 09.10.1992 DE 4234124
(43) Veröffentlichungstag der Anmeldung: 14.09.1994
(73) Patentinhaber: SIEMENS AKTIENGESELLSCHAFT, 80333 München (DE)
(72) Erfinder: Heinzl, Alfred, Dipl.-Ing. (FH), D-81477 München (DE); Krakowetz, Wilhelm, D-86807 Buchloe (DE); Stadler, Heinz, D-81249 München (DE)

(56) Entgegenhaltungen:
- EP-A- 0 085 837
- DE-A- 3 930 676
- FR-A- 2 646 796
- US-A- 2 908 010

## Beschreibung

Die Erfindung betrifft ein Bearbeitungs- und Montagesystem für Kleinbauteile mit einer Trageeinrichtung für Werkzeuge und mit einer. Transporteinrichtung zur Förderung der Kleinbauteile entlang der Trageeinrichtung.

Für die Fertigung von Kleinbauteilen, beispielsweise Schaltern und Relais, sind verschiedene Montagesysteme bekannt, wobei jeweils die Werkzeuge auf einem speziell zugeschnittenen oder universell verwendbaren Montagetisch befestigt werden und wobei die einzelnen Bauteile mit einer Art von Förderband von einem Werkzeug zum anderen bewegt werden. Herkömmliche Fertigungsstraßen mit mehreren Werkzeugen in Reihe sind meist sehr kompliziert aufgebaut und in allen Einzelheiten an das spezielle Produkt angepaßt. Eine Umrüstung einer solchen Fertigungsstraße auf ein neues Produkt ist sehr langwierig und aufwendig.

Aus der EP 0 085 837 A1 ist auch bereits eine Fertigungseinrichtung zur Bearbeitung von Kleinbauteilen bekannt, bei der Transport und Speicherung der einzelnen Bauteile dadurch vereinfacht sind, daß die Bauteile auf stabförmigen Magazinen angeordnet und in diesen Magazinen an den jeweiligen Werkzeugen vorbeigeführt werden können. Die Magazine selbst sind dort jeweils vor der Bearbeitung und nach der Bearbeitung in mehrstöckigen Kassetten gestapelt. Für die Bearbeitungswerkzeuge ist dort jedoch wiederum ein Montagetisch in herkömmlicher Art vorgesehen, auf dem das Werkzeug oder die Werkzeuge jeweils individuell befestigt und zu der Transporteinrichtung ausgerichtet werden müssen.

Alle Montagetische herkömmlicher Art haben den Nachteil, daß die Tischebene als Bezugsfläche für den Werkzeugeinbau die Möglichkeiten der Werkzeuganordnung einschränkt, da beispielsweise der Raum unterhalb der Tischebene meist schwer zugänglich ist und vor allem Änderungen oder Reparaturen in diesem Bereich schwierig sind. In der Tischebene selbst (im Plattendickenbereich) ist keine Werkzeuganordnung möglich. Außerdem ist eine beliebige Anordnung von Werkzeugen längs der Förderrichtung der Bauteile in der Regel nicht möglich, da die Montagetische aufgrund ihrer Abmessungen und ihrer Konstruktion die Anordnung der Werkzeuge bestimmen. Dazu kommt das Problem, daß herkömmliche Transporteinrichtungen für die Bauteile jeweils eigens an den Aufbau der Montagetische angepaßt werden mußten.

Das Dokument US-A-2908010 offenbart ein Bearbeitungs- und Montagesystem für Kleinbauteile mit einer als Trageeinrichtung für Werkzeuge durchlaufenden profilierten Montageschiene und mit einer Transporteinrichtung zur Förderung der Kleinbauteile entlang der Trageeinrichtung.

Aufgabe der Erfindung ist es, ein Bearbeitungs- und Montagesystem der eingangs genannten Art zu schaffen, bei dem Werkzeuge und Transporteinrichtungen sehr einfach jeweils individuell nach den Erfordernissen und platzsparend zueinander angeordnet und ausgerichtet werden können, wobei zugleich alle Teile des Systems für Reparaturen und Änderungen leicht zugänglich bleiben und auf einfache Weise an unterschiedlichste Produkte angepaßt werden können.

Erfindungsgemäß wird dieses Ziel bei einem Bearbeitungs- und Montagesystem dadurch erreicht, daß als Trageeinrichtung für die Werkzeuge eine durchlaufende, profilierte Montageschiene dient, welche mindestens zwei zueinander rechtwinkelig verlaufende Längsseiten als Richtebenen sowie mindestens eine zwischen den Richtebenen im Bereich der gemeinsamen Schnittlinie diagonal eingearbeitete Längsnut aufweist, und daß die Werkzeuge sowie die Transporteinrichtung jeweils entlang der Montageschiene angeordnet, an zwei zueinander senkrechten Richtebenen ausgerichtet und mittels in einer Längsnut verankerter Befestigungselemente verspannt sind.

Bei der Erfindung wird also anstelle herkömmlicher einzelner Montagetische, die mit gleichen oder unterschiedlichen Abmessungen aneinandergereiht werden, eine durchlaufende Montageschiene verwendet, die nicht nur eine Tischebene als Bezugsebene besitzt, sondern mit mindestens zwei, vorzugsweise jedoch vier Richtebenen aufgrund eines Rechteck-Querschnittes aufweist. Diese Montageschiene, die beispielsweise an den Enden und, soweit notwendig, in bestimmten Abständen in beliebiger Weise gestützt und befestigt sein kann, ist ansonsten von allen Seiten zugänglich und kann dementsprechend auch von allen Seiten her mit Werkzeugen und Transporteinrichtungen bestückt werden. Zur Befestigung dienen dabei die erwähnten Längsnuten, die in mindestens eine, vorzugsweise jedoch in drei der Längskanten eingearbeitet sind. Wird ein Werkzeug beispielsweise mit einer Schraube in einer solchen Längsnut befestigt und damit gegen die beiden an die Längsnut angrenzenden Richtebenen festgespannt, so ist es nicht nur zu der Montageschiene, sondern auch zu allen anderen Werkzeugen und Transporteinrichtungen an dieser Montageschiene einfach und zuverlässig ausgerichtet. Alle Montageeinrichtungen können auf der Montageschiene in deren Längsrichtung stufenlos verschoben und an beliebiger Stelle fixiert werden. Zusammen mit der Möglichkeit einer Anordnung der Werkzeuge von allen Seiten am Umfang der Montageschiene ermöglicht dies eine kompakte Bauweise, wobei trotzdem alle Werkzeuge von den verschiedenen Seiten her gut zugänglich bleiben. Alle Einrichtungen sind leicht auswechselbar, ein Fixieren mit Stiften in herkömmlicher Weise ist nicht erforderlich.

Die Befestigung erfolgt zweckmäßigerweise mit Schrauben, deren zugehörige Muttern in der jeweiligen Längsnut gehalten sind. Dabei wäre es durchaus denkbar, die Schraubenmuttern in einer einfachen Längsnut mit geraden Seitenwänden zu verspannen. In einer bevorzugten Ausführungsform besitzen die Längsnuten jedoch ein hinterschnittenes Profil, etwa ein T-Profil. Dabei können die Schraubenmuttern in den hinterschnittenen Teilen der Längsnuten beliebig verschoben werden, ohne herauszufallen. Mit der erfindungsgemäßen Montageschiene läßt sich auch die Transporteinrichtung auf sehr einfache Weise verwirklichen, indem nämlich eine Längskante der Montageschiene als Führungskante für die Transporteinrichtung dient, wobei ein an diese Führungskante angrenzender Bereich einer senkrechten Richtebene zusammen mit einem an der Montageschiene befestigten Längsschienensystem einen Führungskanal bildet, in welchem die Bauteile mittels einer Vorschubeinrichtung bewegt werden können. Zweckmäßigerweise werden die Bauteile auf Stabmagazinen bewegt, wie sie beispielsweise in der oben erwähnten EP 0 085 837 A1 beschrieben sind.

Durch die allseitige Befestigungsmöglichkeit von Werkzeugen ergibt sich die Möglichkeit, für alle wesentlichen Bearbeitungsvorgänge einfache Linear-Antriebe zu verwenden, die an der gewünschten Seite der Montageschiene je nach Platzverhältnissen mit mehr oder weniger großem Abstand befestigt werden und mit einer entsprechend langen Betätigungsstange das zugehörige Werkzeug betätigen. Vorzugsweise kann eine Linear-Antriebsvorrichtung verwendet werden, wie sie in der DE 39 41 748 A1 beschrieben ist. Solche Linear-Antriebe sind im übrigen einfach anzusteuern und mit einem einfachen Grundaufbau leicht an die unterschiedlichsten Gegebenheiten anzupassen. Erfordert das Werkzeug eine Drehbewegung, so kann die geradlinige Bewegung der Betätigungsstange über ein Gelenk im Werkzeug selbst leicht in eine Drehbewegung umgesetzt werden. Durch abgestimmte Steuerung mehrerer in einem Koordinatensystem angeordneter Linear-Antriebe können im übrigen auch kompliziertere Bewegungsabläufe, beispielsweise eine rechteckförmige Vorschubbewegung für die Transporteinrichtung, erzeugt werden.

Die Erfindung wird nachfolgend an Ausführungsbeispielen anhand der Zeichnung näher erläutert. Es zeigen
Figur 1 einen Abschnitt einer erfindungsgemäß gestalteten Montageschiene mit einer schematisch gezeigten Transporteinrichtung und einem ebenfalls schematisch dargestellten Werkzeugträger,
Figur 2 eine Montageschiene im Querschnitt mit verschiedenen Werkzeugen und Antriebsvorrichtungen,
Figur 3 und 4 einen Abschnitt der Montageschiene in Seitenansicht und im Querschnitt mit einer Halte- und Hebevorrichtung für Bauelemente,
Figur 5 einen Ausschnitt der Montageschiene in Seitenansicht mit einer schematisch dargestellten Vorschubeinrichtung.

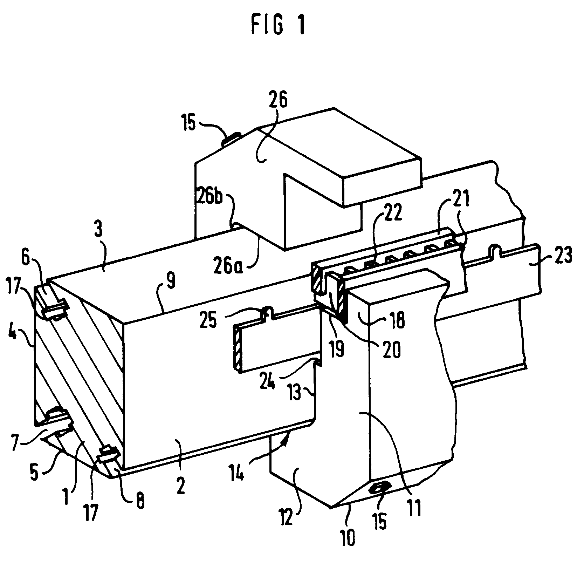

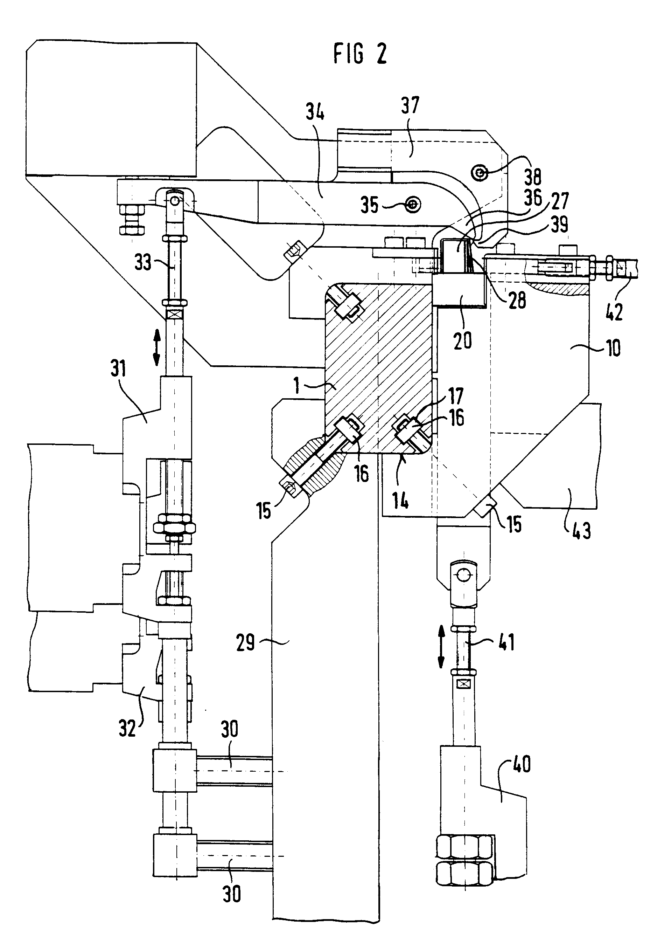

Die in Figur 1 perspektivisch und in Figur 2 im Querschnitt dargestellte metallische Montageschiene besitzt einen rechteckigen Grundquerschnitt, deren jeweils paarweise parallele Seitenflächen 2, 3, 4 und 5 jeweils als Richtflächen für alle Werkzeuge und Transporteinrichtungen des Systems dienen. In drei Kantenbereichen zwischen den Seitenflächen 3 und 4, 4 und 5 sowie 5 und 2, ist jeweils eine Längsnut 6, 7 bzw. 8 mit einem T-förmigen Querschnitt eingearbeitet. Die Längsnuten erstrecken sich unter einem Winkel von 45° zu den Seitenflächen; andere Winkel wären zwar denkbar, würden jedoch die Konstruktion und die Handhabung verkomplizieren. Die restliche Kante 9 zwischen den Seitenflächen 2 und 3 ist im vorliegenden Beispiel ohne Längsnut belassen und dient als Führungskante für die noch zu beschreibende Transporteinrichtung. Bei Bedarf könnte aber auch sie mit einer Längsnut versehen werden.

Die Transporteinrichtung weist einen Führungsblock 10 auf, der wie die übrigen Trageteile zur Befestigung an der Montageschiene 1 zwei Schenkel 11 und 12 mit zueinander senkrechten Anlageflächen 13 und 14 aufweist. Mit einer Schraube 15 und einer Mutter 16 (siehe in Figur 2 mit ansonsten etwas abgewandelter Darstellung) ist der Führungsblock befestigt, wobei die Anlageflächen 13 und 14 gegen die Seitenflächen 2 und 5 der Montageschiene verspannt werden; der Führungsblock 10 wird dadurch genau zur Montageschiene 1 ausgerichtet. In den hinterschnittenen Querabschnitten 17 der Längsnuten 6, 7 und 8 ist jeweils eine beliebige Anzahl von Muttern 16 unverlierbar angeordnet. Diese Muttern können nach Bedarf in Längsrichtung der Montageschiene verschoben werden, um Montage und Transporteinrichtungen stufenlos zu verstellen und an beliebigen Positionen zu befestigen.

Der Führungsblock 10 bildet an seinem oberen Ende mit einer zurückgesetzten Rippe 18 einen Führungskanal 19, der an der gegenüberliegenden Seite durch die Seitenfläche 2 im Bereich der Kante 9 der Montageschiene 1 begrenzt wird. In diesem Führungskanal 19 ist ein stabförmiges Magazin 20 in Längsrichtung verschiebbar angeordnet. Dieses vereinfacht dargestellte Magazin 20 besitzt beispielsweise zwei seitliche Wangen 21, die mit Querstegen 22 verbunden sind. Diese Querstege bilden eine Rasterteilung für die genaue Positionierung der zu bearbeitenden Bauelemente; sie lassen im übrigen Zwischenräume für den Durchgriff von Werkzeugen, beispielsweise einer Hebeeinrichtung zum Anheben eines Bauelementes in einer Bearbeitungsstation. Außerdem können die Querstege an der Unterseite so gestaltet sein, daß eine Vorschubeinrichtung an ihnen angreifen und das Magazin auf diese Weise in Transportrichtung weiterschieben kann. Bei dem Beispiel in Figur 1 dient hierzu eine Vorschubleiste 23, welche in einem Spalt 24 zwischen dem Führungsblock 10 und der Seitenfläche 2 beweglich geführt ist und mit Vorschubzähnen 25 jeweils zwischen die Querstege 22 des Magazins 20 eingreift und dieses vorwärts schiebt. Dies wird näher anhand der Figur 5 noch beschrieben.

In Figur 1 ist weiterhin noch schematisch ein Werkzeugträger 26 gezeigt, der mit einer Schraube 15 in der Nut 6 der Montageschiene befestigt und dabei mit zwei zueinander senkrechten Anlageflächen 26a und 26b an den Seitenflächen 3 und 4 der Montageschiene ausgerichtet wird.

Figur 2 zeigt die Anordnung verschiedener Montagewerkzeuge an der im Schnitt dargestellten Montageschiene 1. Zu sehen ist wiederum in leichter Abwandlung gegenüber Figur 1 der Führungsblock 10 mit einem vereinfacht dargestellten Stabmagazin 20 in Vorderansicht, auf welchem als Bauteil schematisch ein Relais 27 zu sehen ist. Dieses Relais 27 ist aus dem Magazin 20 nach oben in eine Bearbeitungsposition gehoben, wobei beispielsweise eine Lagerfeder des Ankers 28 mit verschiedenen Werkzeugen justiert werden soll. Die Einzelheiten des Relais spielen hier jedoch keine Rolle und sollen auch nicht näher beschrieben werden; das Relais wird nur beispielshalber als ein zu montierendes und zu bearbeitendes Bauelement erwähnt.

Zur Befestigung verschiedener Werkzeugantriebe dient ein Antriebsträger 29, der sich von der Montageschiene 1 nach unten erstreckt und über eine Schraube 15 in der Nut 7 der Montageschiene 1 befestigt ist. Die Ausrichtung erfolgt auch hierbei an den zwei zueinander senkrechten Seitenflächen 4 und 5 (Figur 1) der Montageschiene 1. An dem Antriebsträger 29 sind über Streben 30 Linear-Antriebsvorrichtungen 31 und 32 befestigt, wobei die Antriebsvorrichtung 32 durch die Antriebsvorrichtung 31 verdeckt und somit nur teilweise zu sehen ist. Diese Linear-Antriebsvorrichtungen sind beispielsweise gemäß DE 39 41 748 A1 bzw. US-5,065,663 A aufgebaut. Sie besitzen jeweils eine Antriebsstange 33, deren Länge jeweils so gewählt werden kann, daß ein zugehöriges Werkzeug betätigt werden kann. Im vorliegenden Beispiel greift die Betätigungsstange 33 der Antriebsvorrichtung 31 an dem Werkzeug 34 an, welches an einer Achse 35 gelagert ist. Die Linear-Bewegung der Antriebsstange 33 wird somit in eine Drehbewegung des freien Endes 36 des Werkzeugs 34 umgesetzt, welches somit auf die Ankerfeder des erwähnten Relais drückt, um diese beispielsweise festzuhalten oder zu deformieren. Die nicht sichtbare Antriebsstange 33 der Antriebsvorrichtung 32 wiederum ist in ebenfalls nicht sichtbarer Weise mit einem Werkzeug 37 gekoppelt, welches auf einer Achse 38 gelagert ist. Hierbei wird die Linear-Bewegung der Antriebsvorrichtung 32 in eine Drehbewegung um die Achse 38 umgesetzt, wobei das freie Ende 39 dieses zweiten Werkzeugs ebenfalls in einer Drehbewegung auf die erwähnte Ankerfeder drückt. Auf diese Weise können verschiedene Montage- und Bearbeitungsvorgänge durch die Linear-Antriebe durchgeführt werden.

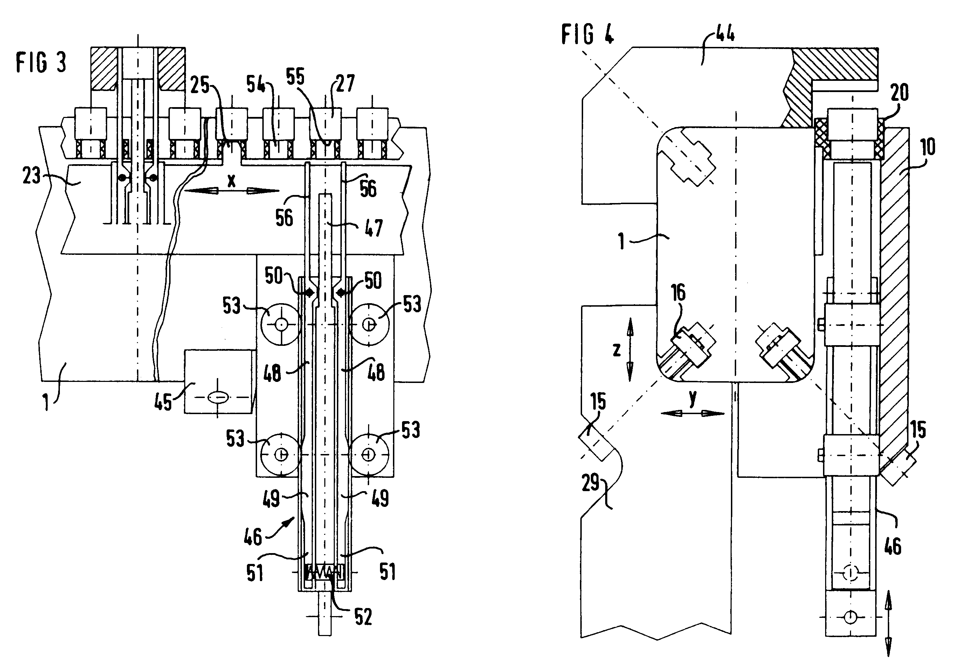

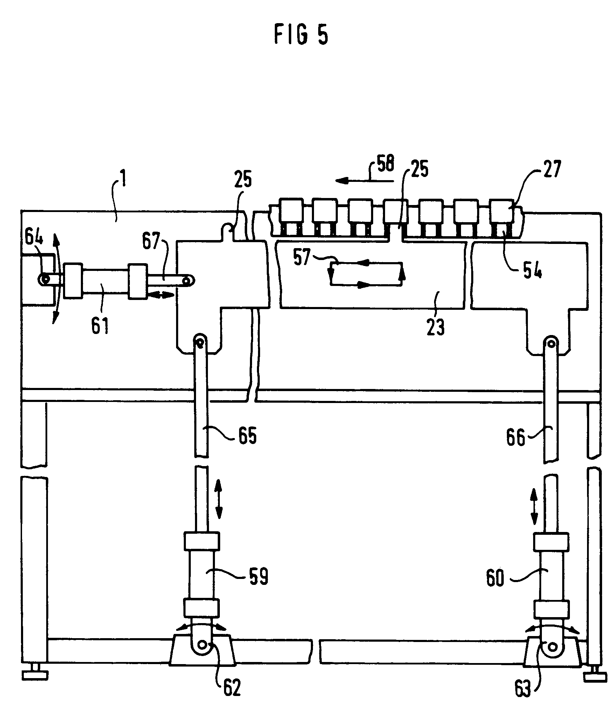

Zum Anheben des Relais 27 in die Bearbeitungsposition dient beispielsweise eine weitere Linear-Antriebsvorrichtung 40, welche in nicht dargestellter Weise ebenfalls mit dem Antriebsträger 29 verbunden ist und über eine Antriebsstange 41 durch den Führungsblock 10 hindurch in das Stabmagazin 20 eingreift. Dieser Vorgang wird anhand der Figuren 3 und 4 später noch näher erläutert.

In Figur 2 ist andeutungsweise eine Antriebsstange 42 einer nicht sichtbaren weiteren Antriebsvorrichtung gezeigt, welche in der Figur von rechts in den Bereich des Führungsblocks 10 eingreift. Diese Antriebsstange kann beispielsweise das Relais 27 in der Bearbeitungsposition festhalten oder zu Prüfzwecken die Ankerlage abtasten. Auch diese zu der Betätigungsstange 42 gehörende Antriebsvorrichtung ist über einen nur teilweise sichtbaren Träger 43 mit der Montageschiene 1 verbunden und ihr gegenüber ausgerichtet.

Alle Antriebseinrichtungen können somit im Grundaufbau gleich gestaltet sein, wobei durch die jeweilige Anordnung und durch die Auslegung der Betätigungsstangen sowie gegebenenfalls durch entsprechende Umlenkglieder alle erforderlichen Arbeitsvorgänge ausgeführt werden können. Durch die Anordnung der Antriebsvorrichtungen an allen Seiten der Montageschiene 1 ergibt sich eine übersichtliche und doch kompakte Anordnung des Montagesystems, wobei jede Einheit auch leicht für Reparaturen oder Änderungen zugänglich ist.

In den Figuren 3 und 4 ist in zwei Ansichten ein Beispiel dargestellt, wie bei dem erfindungsgemäßen Montagesystem auch kompliziertere Greif- und Hebebewegungen über einen Linear-Antrieb durchgeführt werden können. Hierbei sind wiederum ein Führungsblock 10 (an etwas anderer Stelle geschnitten als bei Figur 2) sowie ein Antriebsträger 29 an der Montageschiene 1 befestigt. Weiterhin trägt die Montageschiene 1 eine Zentriereinrichtung 44, welche das jeweilige Bauelement für die Bearbeitung aufnimmt und positioniert. In den Figuren 3 und 4 sind auch die drei Achsrichtungen X, Y und Z eines kartesischen Koordinatensystems gezeigt. Die Werkzeuge sind jeweils durch die Richtflächen der Montageschiene 1 in der Y- und in der Z-Richtung festgelegt. In der X-Richtung sind sie beliebig verschiebbar, um dann an der gewünschten Stelle fixiert zu werden. Durch Anschlagklötze 45 kann dabei ihre Position vorgegeben und fixiert werden.

Die Figuren 3 und 4 zeigen außerdem in zwei Ansichten eine Anhebe- und Klemmeinrichtung 46, welche im Bereich des Führungsblocks 10 angebracht ist. Sie besitzt einen Mittelsteg 47 sowie zwei spiegelbildlich ausgebildete Klemmbacken 48, welche an ihrer Außenoberfläche eine Kurvenform mit einem Nockenabschnitt 49 aufweisen. Die beiden Klemmbacken sind jeweils an einer Achse 50 schwenkbar gelagert und an ihren hinteren Enden 51 durch eine Feder 52 nach außen vorgespannt. Die gesamte Anhebe- und Klemmeinrichtung 46 ist zwischen paarweise angeordneten Rollenlagern 53 in senkrechter Richtung verfahrbar.

Wie bereits früher beschrieben, werden die einzelnen Bauelemente, beispielsweise Relais 27, auf dem stabförmigen Magazin 20 durch die Vorschubleiste 23 und deren Vorschubzahn 25 in der X-Richtung im Arbeitstakt bewegt. Dabei gelangt jedes Bauelement in die Bearbeitungsposition über der Anhebe- und Klemmeinrichtung 46.

Zum Anheben des Bauelementes bzw. Relais 27 wird die Anhebe- und Klemmeinrichtung 46 nach oben bewegt. Dabei fährt der Mittelsteg 47 durch die Ausnehmung 54 des Magazins 20 und drückt auf die Unterseite 55 des Bauelementes bzw. Relais 27. Während dieser Aufwärtsbewegung laufen die Nocken 49 der Klemmbacken über die Rollenlager 53, wodurch die vorderen Enden 56 der Klemmbacken entgegen der Vorspannung durch die Feder 52 auseinandergedrückt werden, bei ihrer Aufwärtsbewegung das Bauelement 27 umfassen und bei der weiteren Bewegung festhalten und es nach oben führen. Dort wird es in der Zentriereinrichtung 44 für die vorgesehene Bearbeitung genau positioniert. Diese obere Position der Anhebe- und Klemmeinrichtung 46 ist in Figur 3 im linken Teil gezeigt.

Nachdem in der geschilderten Position innerhalb der Zentriereinrichtung 44 die Montagevorgänge durchgeführt wurden, kann die Anhebe- und Klemmeinrichtung 46 wieder nach unten gefahren werden. Dabei laufen die Nocken wieder über die Rollenlager 53, wobei die Klemmbacken ihre vorderen Enden 56 öffnen und das Bauelement bzw. Relais 27 in das Magazin ablegen. Letzteres kann dann im Arbeitstakt um eine Teilung weiterbewegt werden.

Figur 5 zeigt in einer schematischen Darstellung den Antrieb für die Vorschubleiste 23, welche zwischen der Montageschiene 1 und dem in Figur 5 nicht gezeigten Führungsblock 10 in einem Spalt geführt ist. Diese Vorschubleiste 23 soll jeweils angehoben werden, um mit einem Zahn 25 in eine Ausnehmung 54 des Magazins 20 einzugreifen. Danach soll in einer waagerechten Vorwärtsbewegung das Magazin um eine Teilung weitergeschoben werden. Danach soll die Vorschubleiste abgesenkt werden, um den Zahn 25 außer Eingriff zu bringen, um schließlich in einer parallelen Linear-Bewegung außer Eingriff an ihre Ausgangsposition zurückzukehren. Diese Rechteckbewegung, wie sie mit dem Bezugszeichen 57 angedeutet ist, soll also zu einer Vorwartsbewegung gemäß dem Pfeil 58 für das Magazin 20 bzw. die Bauelemente 27 führen. Zur Erzeugung dieser Bewegung ist die Leiste mit zwei im wesentlichen senkrecht angeordneten Linear-Antriebsvorrichtungen 59 und 60 sowie mit einer waagerecht angeordneten Linear-Antriebsvorrichtung 61 verbunden. Alle drei Linear-Antriebsvorrichtungen 59, 60 und 61 sind mit ihrem einen Ende schwenkbar an der Montageschiene bzw. einem damit verbundenen Rahmen gelagert, und zwar in den Lagerpunkten 62, 63 und 64. Mit ihren Betätigungsstangen 65, 66 und 67 greifen sie ebenfalls beweglich an der Vorschubleiste 23 an. Durch entsprechende Steuerung dieser drei Linear-Antriebsvorrichtungen 59, 60 und 61 läßt sich dann die gewünschte Rechteckbewegung 57 erzeugen.

## Patentansprüche

1. Bearbeitungs- und Montagesystem für Kleinbauteile mit einer als Trageeinrichtung für Werkzeuge durchlaufenden, profilierten Montageschiene und mit einer Transporteinrichtung zur Förderung der Kleinbauteile entlang der Trageeinrichtung,
**dadurch gekennzeichnet,**
daß die genannte durchlaufende, profilierte Montageschiene (1) mindestens zwei zueinander rechtwinkelig verlaufende Längsseiten (2, 3, 4, 5) als Richtebenen sowie mindestens eine zwischen den Richtebenen im Bereich der gemeinsamen Schnittlinie jeweils diagonal eingearbeitete Längsnut (6, 7, 8) aufweist, und daß die Werkzeuge sowie die Transporteinrichtung über entsprechende Befestigungseinrichtungen (10, 26, 29, 44) jeweils entlang der Montageschiene (1) angeordnet, an zwei zueinander senkrechten Richtebenen ausgerichtet und mittels in einer Längsnut (6, 7, 8) verankerter Befestigungselemente (15, 16) verspannt sind.

2. Bearbeitungs- und Montagesystem nach Anspruch 1,
**dadurch gekennzeichnet,**
daß die Längsnuten (6, 7, 8) ein hinterschnittenes Profil, vorzugsweise ein T-Profil aufweisen, in welchem Schraubenmuttern in Längsrichtung der Montageschiene (1) verschiebbar gehalten sind.

3. Bearbeitungs- und Montagesystem nach Anspruch 1 oder 2,
**dadurch gekennzeichnet,**
daß die Montageschiene (1) grundsätzlich einen Rechteck- oder Quadrat-Querschnitt mit vier zueinander senkrecht verlaufenden Richtebenen (2, 3, 4, 5) besitzt und daß mindestens in drei Längskantenbereichen jeweils Längsnuten (6, 7, 8) eingearbeitet sind.

4. Bearbeitungs- und Montagesystem nach einem der Ansprüche 1 bis 3,
**dadurch gekennzeichnet,**
daß eine Längskante (9) der Montageschiene als Führungskante für die Transporteinrichtung dient, daß ein an diese Führungskante angrenzender Bereich einer senkrechten Richtebene (2) zusammen mit einem an der Montageschiene (1) befestigten Längsschienensystem (10) einen Führungskanal (19) bildet, in welchem die Bauteile (28) mittels einer Vorschubeinrichtung längs der Montageschiene bewegbar sind.

5. Bearbeitungs- und Montagesystem nach Anspruch 4,
**dadurch gekennzeichnet,**
daß die Bauteile (28) auf unterteilten Stabmagazinen (20) sitzen, welche in dem Führungskanal (19) in einem vorgegebenen Fertigungstakt jeweils um eine vorbestimmte Teilung weitergeschoben werden.

6. Bearbeitungs- und Montagesystem nach Anspruch 5,
**dadurch gekennzeichnet,**
daß unterhalb des Führungskanals (19) eine Vorschubleiste (23) angeordnet ist, welche im Takt jeweils eine kombinierte Hub- und Vorschubbewegung ausführt und während des Vorschubs jeweils über einen Betätigungszahn (25) mit dem Magazin (20) in Eingriff gebracht wird.

7. Bearbeitungs- und Montagesystem nach einem der Ansprüche 1 bis 6,
**dadurch gekennzeichnet,**
daß für Transport- und Werkzeug-Arbeitsbewegungen jeweils Linear-Antriebe (31, 32, 40, 59, 60, 61) an der Montageschiene (1) befestigt sind, deren Längsbewegung gegebenenfalls über ein Gelenk in eine Drehbewegung umsetzbar ist.

8. Bearbeitungs- und Montagesystem nach Anspruch 7,
**dadurch gekennzeichnet,**
daß die Linear-Antriebe (31, 32, 40, 59, 60, 61) jeweils in einer der drei Hauptachsen eines kartesischen Koordinatensystems arbeiten, welche zu den Richtebenen der Montageschiene (1) jeweils parallel oder senkrecht stehen.

9. Bearbeitungs- und Montagesystem nach einem der Ansprüche 6 bis 8,
**dadurch gekennzeichnet,**
daß über zueinander senkrecht stehende Linear-Antriebe (59, 60, 61) eine Rechteckbewegung für eine Vorschubleiste (23) erzeugt wird.

10. Bearbeitungs- und Montagesystem nach einem der Ansprüche 7 bis 9,
**dadurch gekennzeichnet,**
daß eine Hebe- und Klemmeinrichtung (46) vorgesehen ist, welche über einen Linear-Antrieb (40) senkrecht zur Vorschubrichtung bewegbar ist, wobei zwei Klemmbacken (48) senkrecht zur Bewegungsrichtung durch Federkraft vorgespannt sind und in ihrer gegenseitigen Stellung zueinander durch eine Kurvenführung in Abhängigkeit von der Höhenposition veränderbar sind.

## Claims

1. Machining and assembling system for entail components, having a continuous, profiled assembly rail as carrying apparatus for tools and having a transport apparatus for conveying the small components along the carrying apparatus, characterized in that the said continuous, profiled assembly rail (1) has at least two longitudinal sides (2, 3, 4, 5) which extend at right angles to one another as directional planes and at least one longitudinal groove (6, 7, 8) machined diagonally in each case between the directional planes in the region of the common line of intersection, and in that the tools and the transport apparatus are in each case arranged by means of corresponding fastening devices (10, 26, 29, 44) along the assembly rail (1), are aligned with two mutually perpendicular directional planes and are clamped by means of fastening elements (15, 16) anchored in a longitudinal groove (6, 7, 8).

2. Machining and assembling system according to Claim 1, characterized in that the longitudinal grooves (6, 7, 8) have an undercut profile, preferably a T-profile, in which nuts are held such that they can be displaced in the longitudinal direction of the assembly rail (1).

3. Machining and assembling system according to Claim 1 or 2, characterized in that the assembly rail (1) has in principle a rectangular or square cross-section having four directional planes (2, 3, 4, 5) extending at right angles to one another, and in that longitudinal grooves (6, 7, 8) are in each case machined in at least three longitudinal edge regions.

4. Machining and assembling system according to one of Claims 1 to 3, characterized in that one longitudinal edge (9) of the assembly rail serves as a guide edge for the transport apparatus, in that a region adjoining this guide edge of a vertical directional plane (2), together with a longitudinal rail system (10) fastened on the assembly rail (1), forms a guide channel (19) in which the components (28) can be moved along the assembly rail by means of an advance apparatus.

5. Machining and assembling system according to Claim 4, characterized in that the components (28) are seated on subdivided rod magazines (20) which are pushed further in the guide channel (19), in each case by a predetermined scale division, at a given production cycle rate.

6. Machining and assembling system according to Claim 5, characterized in that underneath the guide channel (19) there is arranged an advance strip (23) which carries out a combined lifting and advancing movement at the cycle rate and, during the advance, is in each case brought into engagement with the magazine (20) via an actuating tooth (25).

7. Machining and assembling system according to one of Claims 1 to 6, characterized in that, for the transport and tool operating movements, linear drives (31, 32, 40, 59, 60, 61), whose longitudinal motion can if necessary be converted via a joint into a rotary motion, are in each case fastened on the assembly rail (1).

8. Machining and assembling system according to Claim 7, characterized in that the linear drives (31, 32, 40, 59, 60, 61) in each case operate in one of the three principal axes of a cartesian coordinate system which are in each case parallel or at right angles to the directional planes of the assembly rail (1).

9. Machining and assembling system according to one of Claims 6 to 8, characterized in that a rectangular motion for an advance strip (23) is produced via linear drives (59, 60, 61) which are at right angles to one another.

10. Machining and assembling system according to one of Claims 7 to 9, characterized in that provision is made of a lifting and clamping device (46) which can be moved at right angles to the advance direction via a linear drive (40), two clamping jaws (48) being pretensioned by spring force at right angles to the direction of motion and being able to be changed with respect to their mutual position, as a function of the height position, by means of a curved guide.

## Revendications

1. Système d'usinage et d'assemblage pour pièces de petites dimensions, comportant comme dispositif porteur pour outils un rail d'assemblage profilé continu, et comportant un dispositif de transport pour transporter les pièces de petites dimensions le long du dispositif porteur, caractérisé en ce que ledit rail d'assemblage (1) profilé continu comporte au moins deux côtés latéraux (2, 3, 4, 5) s'étendant perpendiculairement l'un par rapport à l'autre et servant de plans de référence et au moins une rainure longitudinale (6, 7, 8) ménagée chaque fois en diagonale entre les plans de référence au niveau de la ligne d'intersection commune, et en ce que les outils ainsi que le dispositif de transport sont disposés, par l'intermédiaire de dispositifs de fixation (10, 26, 29, 44) correspondants, chaque fois le long du rail d'assemblage (1), alignés sur deux plans de référence perpendiculaires l'un par rapport à l'autre et serrés au moyen d'éléments de fixation (15, 16) ancrés dans une rainure longitudinale (6, 7, 8).

2. Système d'usinage et d'assemblage selon la revendication 1, caractérisé en ce que les rainures longitudinales (6, 7, 8) possèdent un profilé contre-dépouillé, de préférence un profilé en T, dans lequel des écrous sont tenus de manière à pouvoir se déplacer dans le sens longitudinal du rail d'assemblage (1).

3. Système d'usinage et d'assemblage selon la revendication 1 ou 2, caractérisé en ce que le rail d'assemblage (1) possède par principe une section rectangulaire ou carrée avec quatre plans de référence (2, 3, 4, 5) qui s'étendent verticalement les uns par rapport aux autres, et en ce que des rainures longitudinales (6, 7, 8) sont ménagées respectivement dans au moins trois zones d'arêtes longitudinales.

4. Système d'usinage et d'assemblage selon l'une des revendications 1 à 3, caractérisé en ce qu'une arête longitudinale (9) du rail d'assemblage sert d'arête de guidage pour le dispositif de transport, en ce qu'une zone d'un plan de référence vertical (2), adjacente à ladite arête de guidage forme avec un système de rails longitudinaux (10) fixé au rail d'assemblage (1) un conduit de guidage (19), dans lequel les pièces (28) peuvent se déplacer le long du rail d'assemblage au moyen d'un dispositif d'avance.

5. Système d'usinage et d'assemblage selon la revendication 4, caractérisé en ce que les pièces (28) sont placées sur des magasins à barres (20) compartimentés, lesquels avancent dans le conduit de guidage (19) à une cadence prédéfinie chaque fois d'un compartiment donné.

6. Système d'usinage et d'assemblage selon la revendication 5, caractérisé en ce qu'au-dessous du conduit de guidage (19) est disposée une barre d'avance (23) qui effectue en cadence chaque fois un mouvement combiné vers le haut et vers l'avant et qui, pendant l'avance, est mise en prise avec le magasin (20) par l'intermédiaire de respectivement une dent d'actionnement (25).

7. Système d'usinage et d'assemblage selon l'une des revendications 1 à 6, caractérisé en ce que des entraînements linéaires (31, 32, 40, 59, 60, 61) assurant les mouvements de transport et de travail des outils sont fixés au rail d'assemblage (1), dont le mouvement linéaire peut être transformé, le cas échéant par l'intermédiaire d'une articulation, en un mouvement rotatif.

8. Système d'usinage et d'assemblage selon la revendication 7, caractérisé en ce que les entraînements linéaires (31, 32, 40, 59, 60, 61) travaillent chacun dans l'un des axes principaux d'un système de coordonnées cartésien, lesquels axes sont placés parallèlement ou perpendiculairement aux plans de référence du rail d'assemblage (1).

9. Système d'usinage et d'assemblage selon l'une des revendications 6 à 8, caractérisé en ce que par l'intermédiaire d'entraînements linéaires (59, 60, 61) placés verticalement les uns par rapport aux autres, est généré un mouvement rectangulaire pour une barre d'avance (23).

10. Système d'usinage et d'assemblage selon l'une des revendications 7 à 9, caractérisé en ce qu'un dispositif de levage et de serrage (46) est prévu, lequel peut se déplacer perpendiculairement au sens d'avance par l'intermédiaire d'un entraînement linéaire (40), deux mâchoires de serrage (48) étant précontraintes perpendiculairement au sens de mouvement par effet de ressort et étant réglables dans leur position réciproque par un guidage à came en fonction de la position verticale.
